# EUROPEAN PATENT SPECIFICATION

(11) **EP 3 869 374 B1**
(45) Date of publication and mention of the grant of the patent: **06.09.2023**
(21) Application number: 21179364.1
(22) Date of filing: 14.06.2021
(51) Int. Cl.: G06F 21/60, G06F 21/57, G06F 21/53, G06F 21/62, H04L 9/40, G06N 20/20

(54) **METHOD, APPARATUS AND ELECTRONIC DEVICE FOR PROCESSING USER REQUEST AND STORAGE MEDIUM**
VERFAHREN, VORRICHTUNG UND ELEKTRONISCHE VORRICHTUNG ZUR VERARBEITUNG VON BENUTZERANFORDERUNGEN UND SPEICHERMEDIUM
PROCÉDÉ, APPAREIL ET DISPOSITIF ÉLECTRONIQUE DE TRAITEMENT DE REQUÊTE D'UTILISATEUR ET SUPPORT D'ENREGISTREMENT

(30) Priority: 30.10.2020 CN 202011191057
(43) Date of publication of application: 25.08.2021
(73) Proprietor: Beijing Baidu Netcom Science and Technology Co., Ltd., Beijing 100085 (CN)
(72) Inventor: YU, Naisheng, Beijing, 100085 (CN); ZHANG, Meng, Beijing, 100085 (CN); CHEN, Hao, Beijing, 100085 (CN); SUN, Guanchao, Beijing, 100085 (CN); LU, Yao, Beijing, 100085 (CN)
(74) Representative: Richly & Ritschel Patentanwälte PartG mbB

(56) References cited:
- WO-A1-2019/217876
- CN-A- 109 308 418
- CN-A- 111 401 558
- CN-A- 111 681 091

## Description

### TECHNICAL FIELD

The present disclosure relates to the field of artificial intelligence, and in particular, to the technical fields of intelligent cloud and machine learning, and more in particular, to a method, apparatus and electronic device for processing a user request, and relates to a computer readable storage medium.

### BACKGROUND

With the development of electronic informationization, the user data collected by a single party has not been sufficient to fully evaluate the actual situations of users in other aspects. Therefore, it is often necessary for multiple parties to aggregate the user data collected by themselves (authorized by the users) to train machine learning models capable of outputting more comprehensive and accurate results.

The conventional technology provides a solution by which an initial model is constructed locally by a feature data provider, and the initial model is trained based on its own feature data and a labeled result from a data user, then a call interface of the trained model is provided to the data user.

CN109308418A discloses a model training method and apparatus based on shared data. On the one hand, joint training can be carried out according to the data provided by multiple data providers, so as to obtaina more accurate and comprehensive data model; On the other hand, the operations (such as data decryption operation, local model parameter update operation, etc.) involved in the privacy data during model training are encapsulated in a trusted execution environment of the data provider. Data plaintext cannot be acquired outside the trusted execution environment.

CN111681091A discloses a financial risk prediction method based on time domain information, a financial risk prediction method and device based on time domain information, electronic equipment and a storage medium. The method comprises the steps that label-free financial information sample features matched with a target user are acquired; determining different financial business scenes corresponding to the label-free financial information sample features matched with the target user, and calling a financial information processing model subjected to adversarial training through a time domain training sample; risk prediction processing is carried out on the label-free sample feature set through a financial information processing model; obtaining a financial risk prediction result of the target user.

CN111401558A discloses a data processing model training method, and the method comprises the steps: obtaining a base class data sample set, and extracting features of the base class data sample set through a feature extraction network; processing the extracted features of the base class data sample set through a guidance network in the data processing model so as to determine parameters of the guidance network; processing the extracted features of the base class data sample set through a parameter generation network in the data processing model to determine initial parameters of the parameter generation network; and iteratively updating the initial parameters of the parameter generation network in the data processing model through the output result of the guidance network and the base class data sample set. The invention further provides a data processing method and device and a storage medium.

WO2019217876A1 discloses building timing-prediction models for predicting timing of events that can impact one or more operations of machine-implemented environments. For instance, a computing system can generate program code executable by a host system for modifying host system operations based on the timing of a target event. The program code, when executed, can cause processing hardware to a compute set of probabilities for the target event by applying a set of trained timing-prediction models to predictor variable data. A time of the target event can be computed from the set of probabilities. To generate the program code, the computing system can build the set of timing-prediction models from training data. Building each timing-prediction model can include training the timing-prediction model to predict one or more target events for a different time bin within the training window.

### SUMMARY

Embodiments of the present disclosure provide a method, apparatus and electronic device for processing a user request. Embodiments of the present disclosure also provide a computer readable storage medium.

The invention is defined in the independent claims. Advantageous features are described in the dependent claims.

In a first aspect, an embodiment of the present disclosure provides a method for processing a user request, and the method includes: receiving a user request; sending the user request to a target prediction model stored in a secure container, where the secure container is created in a local storage space by using Software Guard Extensions technology, and the target prediction model is obtained by training an initial prediction model with an encrypted feature sample and a labeled result sample corresponding to the encrypted feature sample, and the encrypted feature sample is transmitted by a feature data provider through a ciphertext transmission path established between the feature data provider and the secure container; and receiving a prediction result output by the target prediction model.

In a second aspect, an embodiment of the present disclosure provides an apparatus for processing a user request, and the apparatus includes: a user request receiving unit configured to receive a user request; a user request sending unit configured to send the user request to a target prediction model stored in a secure container, where the secure container is created in a local storage space by using Software Guard Extensions technology, and the target prediction model is obtained by training an initial prediction model with an encrypted feature sample and a labeled result sample corresponding to the encrypted feature sample, and the encrypted feature sample is transmitted by a feature data provider through a ciphertext transmission path established between the feature data provider and the secure container; and a prediction result receiving unit configured to receive a prediction result output by the target prediction model.

In a third aspect, an embodiment of the present disclosure provides an electronic device, and the electronic device includes: at least one processor; and a memory communicatively connected with the at least one processor, where the memory stores instructions executable by the at least one processor, and the instructions, when executed by the at least one processor, cause the at least one processor to execute the method for processing a user request as described in any one of the implementations of the first aspect.

In a fourth aspect, an embodiment of the present disclosure provides a non-transitory computer readable storage medium storing computer instructions, where the computer instructions cause a computer to execute the method for processing a user request as described in any one of the implementations of the first aspect.

In a fifth aspect, embodiments of the present disclosure provide a computer program product including a computer program, where the computer program, when executed by a processor, implements the method for processing a user request as described in any one of the implementations of the first aspect.

According to the method, apparatus and electron device for processing a user request and computer readable storage medium provided by the embodiments of the present disclosure, a data user receives the user request; the data user sends the user request to the target prediction model stored in the secure container, where the secure container is created in the local storage space by using the Software Guard Extensions technology, and the target prediction model is obtained by training the initial prediction model with the encrypted feature sample and the labeled result sample corresponding to the encrypted feature sample, and the encrypted feature sample is transmitted by the feature data provider through the ciphertext transmission path established between the feature data provider and the secure container; and the data user receives the prediction result output by the target prediction model.

Different from the conventional technology that creates and stores the prediction model on the feature data provider, the present disclosure creates and stores the prediction model on the data user, so that the labeled results that are more sensitive than the feature data provided by the feature data provider do not need to exit the domain from the data user, thereby reducing the risks that may occur due to the data exiting the domain. At the same time, since the target model is more generally used by the data user based on the requests sent by the users, setting the target model locally on the data user may also reduce the performance and time overhead caused by the feature data provider and the long-distance transmission of the data, thereby responding to user requests more quickly.

It should be appreciated that the content described in this section is not intended to identify the key or critical features of the embodiments of the present disclosure, nor is it intended to limit the scope of the present disclosure. The other features of the present disclosure will become easy to understand through the following description.

### BRIEF DESCRIPTION OF THE DRAWINGS

By reading the detailed description of non-limiting embodiments with reference to the following accompanying drawings, other features, objects and advantages of the present disclosure will become more apparent.
Fig. 1 is an exemplary system architecture to which the present disclosure may be applied;
Fig. 2 is a flowchart of a method for processing a user request according to an embodiment of the present disclosure;
Fig. 3 is another flowchart of the method for processing a user request according to an embodiment of the present disclosure;
Fig. 4 is a timing diagram of the method for processing a user request according to an embodiment of the present disclosure;
Fig. 5 is a flowchart of a method for verifying identity legitimacy of transmitted actual data in the method for processing a user request according to an embodiment of the present disclosure;
Fig. 6 is a schematic flowchart of a method for processing a user request in an application scenario according to an embodiment of the present disclosure;
Fig. 7 is a block diagram of an apparatus for processing a user request according to an embodiment of the present disclosure;
Fig. 8 is a schematic structural diagram of an electronic device adapted to implement the method for processing a user request according to an embodiment of the present disclosure.

### DETAILED DESCRIPTION OF EMBODIMENTS

The present disclosure will be further described below in detail with reference to the accompanying drawings and in combination with the embodiments. It should be appreciated that the particular embodiments described herein are merely used for explaining the relevant invention, rather than limiting the invention. In addition, it should be noted that, for the ease of description, only the parts related to the relevant invention are shown in the accompanying drawings.

It should be noted that the embodiments in the present disclosure and the features in the embodiments may be combined with each other on a non-conflict basis. The present disclosure will be described below in detail with reference to the accompanying drawings and in combination with the embodiments.

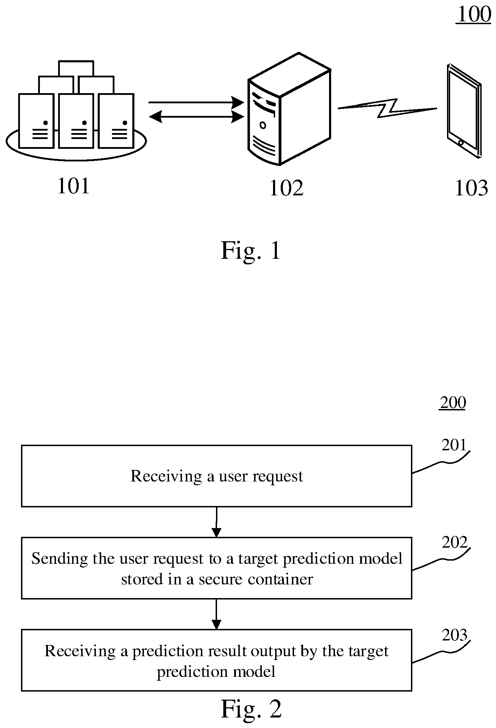

Fig. 1 shows an exemplary system architecture 100 to which embodiments of a method, apparatus and electronic device for processing a user request and computer readable storage medium of the present disclosure may be applied.

As shown in Fig. 1, the system architecture 100 may include a feature data provider 101, a data user 102 and a user terminal 103. The data transmission between the feature data provider 101 and the data user 102, and between the data user 102 and the user terminal 103 may be realized through a network. The network may particularly be a wired or wireless communication link, or an optical fiber cable.

A user may initiate a user request to the data user 102 through the user terminal 103, and the data user 102 may implement the processing of the received user request through various applications installed or running on the data user 102, such as risk rating applications, identity verification applications. At the same time, in order for the data user 102 to properly process the user request, the data user 102 needs to combine with the relevant feature data provided by the feature data provider 101 to indicate whether the content of the initialed user request is reasonable, before processing the user request. To achieve this purpose, corresponding types of applications may be installed or run on both the data user 102 and the user terminal 103, such as multi-party training applications, secure container construction applications.

The feature data provider 101, the data user 102 and the user terminal 103 may be hardware or software. When the user terminal 103 is hardware, the user terminal 103 may be various electronic devices having display screens, including but not limited to, a smart phone, a tablet computer, a laptop computer and a desktop computer. When the user terminal 103 is software, the user terminal 103 may be installed in the electronic devices. The user terminal 103 may be implemented as a plurality of software pieces or software modules, or as a single software piece or software module. It is not particularly limited herein. When the feature data provider 101 and the data user 102 are hardware, the feature data provider 101 and the data user 102 may be implemented as a distributed server cluster composed of multiple servers, or as a single server. When the feature data provider 101 and the data user 102 are software, the feature data provider 101 and the data user 102 may be implemented as multiple software pieces or software modules, or as a single software piece or software module. It is not particularly limited herein.

The user-oriented data user 102 may provide various services through various built-in applications. Taking a request processing application that may provide a decision whether a user request is passed as an example, the data user 102 may achieve the following effects when running the request processing application: first, a user request transmitted by a user through the user terminal 103 is received; then, the user request is sent to a target prediction model stored in a secure container, where the secure container is created by the data user 102 in a local storage space by using Software Guard Extensions technology, and the target prediction model is obtained by training an initial prediction model with an encrypted feature sample and a labeled result sample corresponding to the encrypted feature sample, and the encrypted feature sample is transmitted by a feature data provider through a ciphertext transmission path established between the feature data provider and the secure container; and finally, a prediction result output by the target prediction model and corresponding to the user request is received. Further, the data user 102 may also return the prediction result with corresponding response information to the user terminal 103 to inform the user of the result of its initiated request.

The method for processing a user request provided in the subsequent embodiments of the present disclosure is generally performed by the data user 102, and correspondingly, the apparatus for processing a user request is also generally provided in the data user 102.

It should be appreciated that the number of the feature data provider, the data user and the user terminal in Fig. 1 is merely illustrative. Under the premise of a fixed data user, a large number of feature data providers and user terminals may be available according to actual requirements.

Referring to Fig. 2, Fig. 2 is a flowchart of a method for processing a user request according to an embodiment of the present disclosure, and the flow 200 includes steps 201 to 203.

Step 201 includes receiving a user request.

This step is intended to receive the user request transmitted by a user through a user terminal (for example, the user terminal 103 shown in Fig. 1) by an execution body of the method for processing a user request.

The user request is used to indicate a request initiated by the user for a requirement of the user in an actual application scenario, such as an identity verification request, a sensitive data reading request and a fund lending request. Particularly, the identity verification request may initial a request for verifying a real identity for the user to an application having an identity verification requirement and running on the execution body, so that the application triggers a subsequent operation after determining that the user is a legal user, and the determination may be realized by detecting the identity verification data uploaded by the user with the user request by a relevant determination (or confirmation) model. The sensitive data reading request may initiate a request for reading some sensitive data for the user to an application running on the execution body, so as to determine whether the user may be allowed to read the sensitive data after a determination is made by the request, and the determination may be realized by detecting the right data of the user by a relevant determination (or confirmation) model. The fund lending request may initial a request for a certain amount of fund lending for the user to a lending application running on the execution body and having a verified qualification, so that the application satisfies the fund lending requirement of the user when determining that the user has a sufficient on-time repayment capability, and the determination may be realized by detecting the data related to the financial strength of the user by a relevant determination (or confirmation) model.

Step 202 includes sending the user request to a target prediction model stored in a secure container.

On the basis of step 201, this step is intended to send the user request to the target prediction model stored in the secure container by the execution body. The secure container, called Enclave, is created by the execution body in a local storage space by using Software Guard Extensions technology, and the target prediction model is obtained by training an initial prediction model with an encrypted feature sample and a labeled result sample corresponding to the encrypted feature sample, and the encrypted feature sample is transmitted by a feature data provider through a ciphertext transmission path established between the feature data provider and the secure container, and the labeled result sample corresponding to the encrypted feature sample is provided by the execution body, and is transmitted to the initial prediction model through the Enclave through a local data transmission method for training use.

The Software Guard Extensions are new extensions of the Intel architecture, which adds a new set of instruction sets and memory access mechanisms to the original architecture, and these extensions allow an application to implement a container called Enclave, which divides a protected area in the address space of the application, thereby providing confidentiality and integrity protection for code and data within the container, so that the code and data are protected from malicious software with special rights. The Enclave is a protected content container for storing sensitive data and code of the application. The Software Guard Extensions allow the application to specify code and data portions that need to be protected, which do not have to be checked or analyzed before the Enclave is created, but the code and data loaded into the Enclave must be measured. When the portions of the application that need to be protected are loaded into the Enclave, the Software Guard Extensions protect the portions from being accessed by external software. The Enclave may prove its identity to the remote certifier and provide the necessary functional structure to provide keys securely. The user may also request a unique key, which is unique by combining the identity of the Enclave and the identity of the platform, and may be used to protect keys or data stored outside the Enclave.

It can be seen that the reason why the present disclosure uses the Software Guard Extensions technology to create the prediction model in its Enclave container is because a training sample used to train to obtain the available prediction model is composed of two parts coming respectively from two different execution bodies, one of which is a directly user-oriented data user directly providing a service to the user (for example, the data user 102 shown in Fig. 1), and the other of which is a feature data provider providing the user-oriented data user with partial feature data for obtaining a prediction result and being missed (being not obtained or difficult to obtain) from the data user (for example, the feature data provider 101 shown in Fig. 1).

It should be appreciated that, in the absence of a third party training the prediction model by receiving sensitive data from both the data user and the feature data provider, the prediction model must be created and trained on one of the two parties, and the training samples each provided by the data user and the feature data provider are sensitive data that needs to be kept secret from the other party. Therefore, in order to avoid the one party acquiring the sensitive data of the other party, the present disclosure employs the Software Guard Extensions technology to construct the Enclave that is invisible to both parties, thereby ensuring that either party cannot acquire the sensitive data of the other party.

Different from the conventional technology in which the creation and training of the prediction model is placed on the feature data provider (also referred to as a model provider), the present disclosure uses the method of placing the creation and training of the prediction model on the directly user oriented data user. Therefore, the feature data provider is required to transmit its training sample to the initial prediction model in the secure container (i.e., the Enclave). In order to avoid that the training sample is intercepted during the transmission so as to cause the sensitive data to be lost, the ciphertext transmission path between the feature data provider and the secure container is also required to be constructed, and the ciphertext transmission can be created based on the creation request initiated by the execution body to the feature data provider, or the creation request initiated by the feature data provider to the execution body.

Step 203 includes receiving a prediction result output by the target prediction model.

On the basis of step 202, this step is intended to receive the prediction result corresponding to the user request and output by the target prediction model by the execution body. According to the particular content request by the user request, the prediction result output by the target prediction model may also be used to express different meanings.

For example, when the user request is particularly the identity verification request, the data user and the feature data provider provide the first-type information and the second-type information for determining the real identity of the user, respectively, and the trained target prediction model predicts the possibility that the user belongs to a legal user according to the user data extracted from the user request, that is, the actual possibility is used as the prediction result. When the user request is the sensitive data reading request, the data user and the feature data provider provide the first right information and the second right information of the user, respectively, the trained target prediction model predicts the possibility that the user has the right of the sensitive data reading according to the user data extracted from the user request, that is, the actual possibility is used as the prediction result. When the user request is particularly the fund lending request, the data user may provide deposit information of the user in UnionPay, and the feature data provider may provide a behavior portrait of the user constructed by the user relevant information on the social platform or shopping platform. Then, the trained target prediction model predicts the on-time repayment capability or the risk rating of the non-on-time repayment of the user according to the user identity information extracted from the user request, that is, the on-time repayment capability or the risk rating is used as the prediction result.

Further, the actual risk rating of the user corresponding to the user request is determined according to the prediction result, and in response to the actual risk rating being not higher than a preset rating, response information indicating that the user request is not passed is returned, that is, the request initiated by the user is rejected.

Different from the conventional technology that creates and stores the prediction model on the feature data provider, the method for processing a user request according to the embodiment of the present disclosure creates and stores the prediction model on the data user, so that the labeled results that are more sensitive than the feature data provided by the feature data provider do not need to exit the domain from the data user, thereby reducing the risks that may occur due to the data exiting the domain. At the same time, since the target model is more generally used by the data user based on the requests sent by the users, setting the target model locally on the data user may also reduce the performance and time overhead caused by the feature data provider and the long-distance transmission of the data, thereby responding to user requests more quickly.

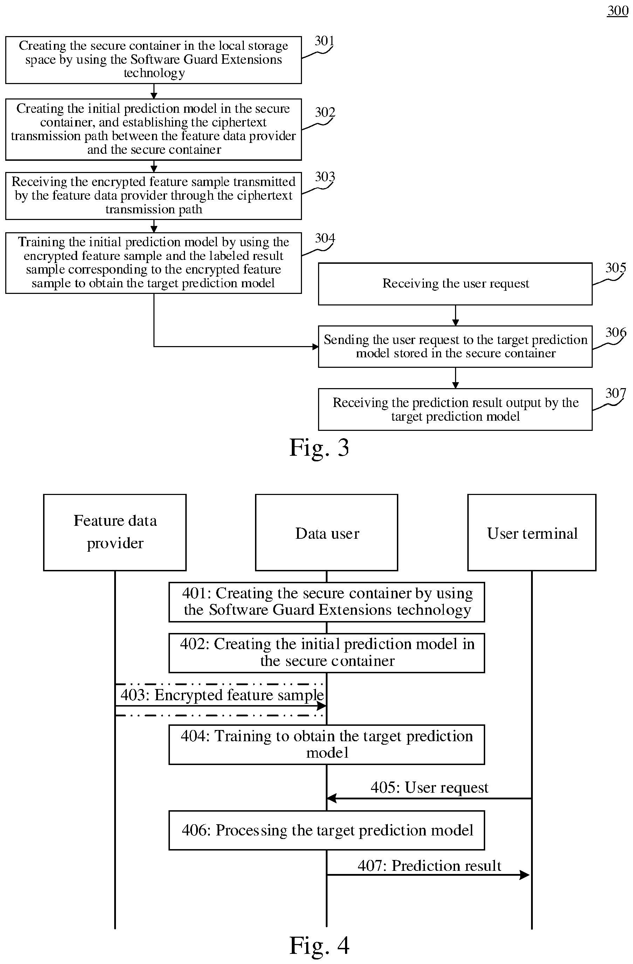

Referring to Fig. 3, Fig. 3 is another flowchart of the method for processing a user request according to an embodiment of the present disclosure, and the flow 300 includes steps 301 to 307.

Step 301 includes creating the secure container in the local storage space by using the Software Guard Extensions technology.

This step is intended to create the secure container in the local storage space by using the Software Guard Extensions technology by the execution body.

Step 302 includes creating the initial prediction model in the secure container, and establishing the ciphertext transmission path between the feature data provider and the secure container.

On the basis of step 301, this step is intended to create the initial prediction model in the secure container by the execution body, and actively establish the ciphertext transmission path between the feature data provider and the secure container by the execution body.

Step 303 includes receiving the encrypted feature sample transmitted by the feature data provider through the ciphertext transmission path.

The encrypted feature sample is a feature sample obtained after the feature data provider encrypts a plaintext feature sample provided by the feature data provider. In order to prevent the encryption method from being known by the execution body, the execution body obtains the sensitive data provided by the feature data provider unilaterally. The encryption method should only be informed of the secure container so that the secure container may convert it into identifiable plaintext data for use.

Step 304 includes training the initial prediction model by using the encrypted feature sample and the labeled result sample corresponding to the encrypted feature sample to obtain the target prediction model.

On the basis of step 303, this step is intended to train the initial prediction model by using the encrypted feature sample and the labeled result sample corresponding to the encrypted feature sample to obtain the trained and available target prediction model. The labeled result sample corresponding to the encrypted feature sample is provided by the execution body, i.e., the sensitive data provided by the execution body in an over-covered method, because the execution may only use this method to provide as much as possible the labeled result corresponding to the actual content of the encrypted feature sample, under the premise that the execution body may not known the particular content of the encrypted feature sample.

Step 305 includes receiving the user request.

Step 306 includes sending the user request to the target prediction model stored in the secure container.

Step 307 includes receiving the prediction result output by the target prediction model.

Steps 305 to 307 are consistent with step 201 to 203 shown in Fig. 2. For the contents of the same parts, the corresponding parts of the previous embodiment is referred, which is not repeated here.

On the basis of the previous embodiment, this embodiment provides a particular solution for obtaining the target prediction model stored on the data user through steps 301 to 304, and the operation method of each step is given in detail, so that the solution is more feasible.

The descriptions of the implementation solutions of the present disclosure in Fig. 2 and Fig. 3 are both described only from the perspective of the user-oriented data user. In order to see more operations performed by different execution bodies in the entire process of the solutions, a timing diagram of the method for processing a user request is provided though Fig. 4, and includes step 401 to 407.

Step 401 includes the data user creating the secure container by using the Software Guard Extensions technology.

Step 402 includes the data user creating the initial prediction model in the secure container.

Step 403 includes the feature data provider sending the encrypted feature sample to the secure container.

Step 404 includes the data user using the encrypted feature sample and the labeled result sample corresponding to the encrypted feature sample to train to obtain the target prediction model.

Step 405 includes the user terminal sending the user request to the data user.

Step 406 includes the data user inputting the user request into the target prediction model for processing.

Step 407 includes the data user returning the prediction result output by the target prediction model to the user terminal.

The timing diagram shown in Fig. 4 shows the operations performed by each of the three execution bodies of the feature data provider, the data user and the user terminal in the entire solution. Steps 401 to 404 describe the data interaction between the feature data provider and the data user, so that the trained target prediction model is constructed on the data user. On this basis, steps 405 to 407 describe the process in which the user terminal interacts with the data user in the actual application scenario, and the trained target prediction model is invoked to output the prediction result.

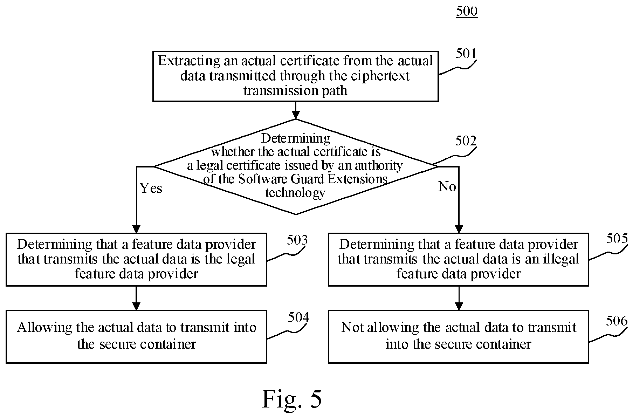

On the basis of any of the previous embodiments, in order to prevent erroneous or malicious data from being transmitted into the secure container and further to interfere with the model training process, the actual data transmitted through the ciphertext transmission path may be verified, that is, whether the sender of the actual data is a legal feature data provider or whether the feature data provider as the sender is in a normal working state is verified. Taking the example of verifying whether the sender is a legal feature data provider, a flow 500 shown in Fig. 5 provides particular steps of identity verification.

Step 501 includes extracting an actual certificate from the actual data transmitted through the ciphertext transmission path.

The legal feature data provider and the data user can apply for an authenticated electronic certificate from electronic certification authority of Intel and embed the authenticated electronic certificate into the data sent by themselves, thereby facilitating the other party to extract the actual certificate from the received data and perform identity verification by sending the authenticated electronic certificate to the authority.

Step 502 includes determining whether the actual certificate is a legal certificate issued by an authority of the Software Guard Extensions technology. If yes, step 503 is performed; otherwise, step 505 is performed.

Step 503 includes determining that a feature data provider that transmits the actual data is the legal feature data provider.

This step is based on the determination in step 502 that the actual certificate is the legal certificate issued by the authority of the Software Guard Extensions technology. Therefore, it may be determined that the feature data provider that transmits the actual data is the legal feature data provider.

Step 504 includes allowing the actual data to transmit into the secure container.

On the basis of step 503, this step is intended to allow the actual data to transmit into the secure container by the execution body.

Step 505 includes determining that a feature data provider that transmits the actual data is an illegal feature data provider.

This step is based on the determination in step 502 that the actual certificate is not the legal certificate issued by the authority of the Software Guard Extensions technology. Therefore, it may be determined that the feature data provider that transmits the actual data is the illegal feature data provider.

Step 506 includes not allowing the actual data to transmit into the secure container.

On the basis of step 505, this step is intended to not allow the actual data to transmit into the secure container by the execution body.

In addition, in a way of verifying whether the feature data provider as the sender is in a normal working state, the above implementation may be improved, for example, in connection with whether the content of the transmitted data is abnormal, whether the transmitted time is a predetermined time, whether there is a particular identification and the like, which are not described in detail here.

On the basis of any of the previous embodiments, in order to ensure the continuous availability of the target prediction model, the execution body may also receive an incremental encrypted feature transmitted from the feature data provider through the ciphertext transmission path, and update the target prediction model by using the incremental encrypted feature and the labeled result corresponding to the incremental encrypted feature. Particularly, the update frequency may be fixed or modifiable, depending on situations.

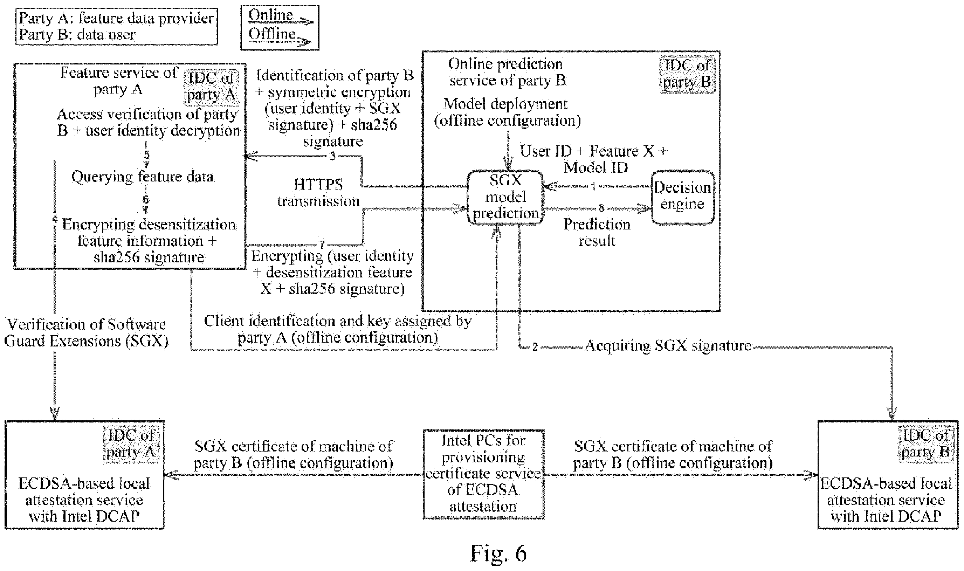

In order to deepen understanding, the present disclosure also combines a particular application scenario to provide a particular implementation solution referring to the flowchart shown in Fig. 6.

The feature data provider is a party A, and the data user is a party B. An online prediction service is developed based on the Software Guard Extensions, is deployed on the Software Guard Extensions machine in the machine room of the party B, and is particularly run in the Enclave created by the Software Guard Extensions technology.

### Preparation:

The Software Guard Extensions machine certificate of the Party B (issued by the certification authority of Intel) is configured into the machine of the Party A for subsequent feature service verifying whether the request is from the authorized Software Guard Extensions machine. The client identification and the key assigned by the party A are configured to the online prediction service of the machine of the party A for requesting signature and data encryption. The prediction model is deployed to the online prediction service of the machine of the party B for subsequent model operation use.
1) Decision engine of the party B request the online prediction service by using the user ID, feature X of the party B (optional, depending on the particular type of model) and model identity as request parameters.
2) The online prediction service requests a local DCAP (Data Link Switching Client Access Protocol) service to obtain information signed by the current Software Guard Extensions machine.
3) The online prediction service re-encrypts the encrypted information encryt obtained by encrypting the user identity and the Software Guard Extensions signature with AES (Advanced Encryption Standard) by using the client key sk assigned by the service of the party A, and generates a sha256 (a hash algorithm with a hash value length of 256 bits) integrity verification signature sign, which is sent to the feature service of the party A together with the client identification ak of the party B, and the communication between the party A and the party B is secured by using a HTTPS (Hyper Text Transfer Protocol over SecureSocket Layer) protocol, which is a secured HTTP protocol.
4) After receiving the request of the party A, the feature service of the party B first verifies the legitimacy of the ak, acquires the sk after the verification is passed, verifies the sign and the data integrity by using the sk, decrypts the encrypt to obtain the plaintext user identity and the Software Guard Extensions signature, and requests the local DCAP service to verify the legitimacy of the Software Guard Extensions signature. If any verification fails, access is rejected.
5) The feature service of the party B requests the database to acquire the desensitization feature information of the user according to the user identity.
6) The feature service of the party B encrypts the feature information of the user with AES by using sk and generates the sha256 integrity verification signature sign.
7) The service of the party A returns the user identity, feature X of the party A and the sha256 signature to the online prediction service.
8) The online prediction service receives the information returned by the party A, decrypts and obtains the feature X of the party A and the feature X of the party B (if present) in the Enclave, invokes the model to perform an operation, generates the model score of the user, and returns the model score to the decision engine of the party A.

In order to deepen understanding of the previous process, a particular implementation flow is also provided in connection with when the user request is particularly a fund lending request.

The feature provider is a user behavior portrait provider capable of collecting a user social behavior and/or a shopping behavior (e.g., a social application and/or a shopping application) for providing a user behavior portrait. The data user is a fund lender that records user asset information (for example, a qualified credit institution such as a bank). After adopting this solution, a target model capable of performing a risk rating on whether a fund lending user may repay on-time is trained by using the user behavior portrait and the user asset information in a computer room of the fund lender.

When the fund lender receives the fund lending request from the user, the fund lender inputs the user identity information included in the user request as input information to the target model so that the target model outputs a risk rating in combination with the user behavior portrait and asset information, and may output the risk rating in the form of a quantified score. The fund lender finally determines whether the fund lending request of the user is passed based on the output risk rating score.

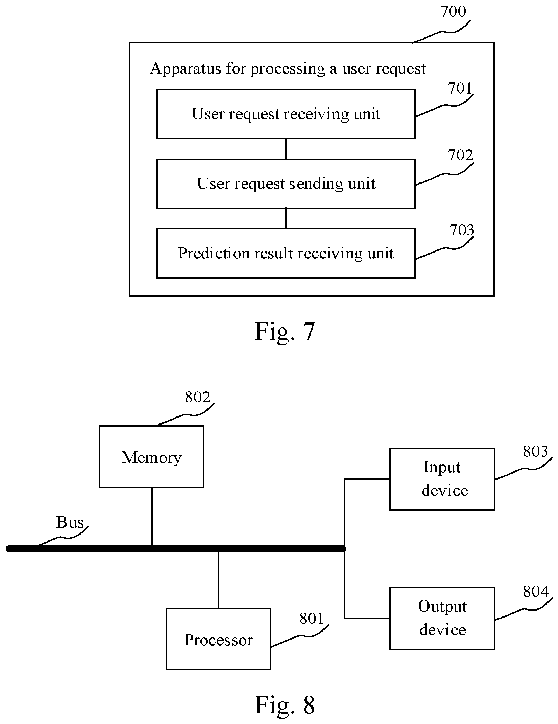

Further referring to Fig. 7, as an implementation of the method shown in each of the above figures, the present disclosure provides an embodiment of an apparatus for processing a user request. The embodiment of the apparatus corresponds to the embodiment of the method shown in Fig. 2, and the apparatus is particularly applicable to various electronic devices.

As shown in Fig. 7, the apparatus 700 for processing a user request of this embodiment may include: a user request receiving unit 701, a user request sending unit 702 and a prediction result receiving unit 703. The user request receiving unit 701 is configured to receive a user request; the user request sending unit 702 is configured to send the user request to a target prediction model stored in a secure container, where the secure container is created in a local storage space by using Software Guard Extensions technology, and the target prediction model is obtained by training an initial prediction model with an encrypted feature sample and a labeled result sample corresponding to the encrypted feature sample, and the encrypted feature sample is transmitted by a feature data provider through a ciphertext transmission path established between the feature data provider and the secure container; and the prediction result receiving unit 703 is configured to receive a prediction result output by the target prediction model.

In this embodiment, the particular processing of the user request receiving unit 701, the user request sending unit 702 and the prediction result receiving unit 703 of the apparatus 700 for processing a user request and the technical effects thereof may be described with reference to the related description of steps 201 to 203 in the embodiment corresponding to Fig. 2, and are thus not repeated herein.

In some alternative implementations of this embodiment, the apparatus 700 for processing a user request may further include a target prediction model training unit configured to obtain the target prediction model by training, where the target prediction model training unit is further configured to:
create the secure container in the local storage space by using the Software Guard Extensions technology;
create the initial prediction model in the secure container, and establish the ciphertext transmission path between the feature data provider and the secure container;
receive the encrypted feature sample transmitted by the feature data provider through the ciphertext transmission path; and
train the initial prediction model by using the encrypted feature sample and the labeled result sample corresponding to the encrypted feature sample to obtain the target prediction model.

In some alternative implementations of this embodiment, the apparatus 700 for processing a user request may further include:
an actual risk rating determining unit configured to determine an actual risk rating of a user corresponding to the user request according to the prediction result; and
a non-pass response information return unit configured to return response information indicating that the user request is not passed, in response to the actual risk rating being not higher than a preset rating.

In some alternative implementations of this embodiment, the apparatus 700 for processing a user request may further include:
an identify verification unit configured to perform identity verification on actual data transmitted through the ciphertext transmission path; and
an identify legal processing unit configured to allow the actual data to transmit into the secure container, in response to a result of the identity verification being a legal feature data provider.

In some alternative implementations of this embodiment, the identify verification unit is further configured to:
extract an actual certificate from the actual data transmitted through the ciphertext transmission path;
determine whether the actual certificate is a legal certificate issued by an authority of the Software Guard Extensions technology;
determine that a feature data provider that transmits the actual data is the legal feature data provider, in response to the actual certificate being the legal certificate; or
determine that a feature data provider that transmits the actual data is an illegal feature data provider, in response to the actual certificate being not the legal certificate.

In some alternative implementations of this embodiment, the apparatus 700 for processing a user request may further include:
an incremental encrypted feature receiving unit configured to receive an incremental encrypted feature transmitted by the feature data provider through the ciphertext transmission path; and
a model updating unit configured to update the target prediction model by using the incremental encrypted feature and a labeled result corresponding to the incremental encrypted feature.

This embodiment exists as the embodiment of the apparatus corresponding to the embodiment of the method. Different from the conventional technology that creates and stores the prediction model on the feature data provider, the apparatus for processing a user request according to the embodiment of the present disclosure creates and stores the prediction model on the data user, so that the labeled results that are more sensitive than the feature data provided by the feature data provider do not need to exit the domain from the data user, thereby reducing the risks that may occur due to the data exiting the domain. At the same time, since the target model is more generally used by the data user based on the requests sent by the users, setting the target model locally on the data user may also reduce the performance and time overhead caused by the feature data provider and the long-distance transmission of the data, thereby responding to user requests more quickly.

According to an embodiment of the present disclosure, the present disclosure further provides an electronic device and a computer readable storage medium.

Fig. 8 is a block diagram of an electronic device adapted to implement the method for processing a user request according to an embodiment of the present disclosure. The electronic device is intended to represent various forms of digital computers, such as laptops, desktops, worktables, personal digital assistants, servers, blade servers, mainframe computers and other suitable computers. The electronic device may also represent various forms of mobile devices, such as personal digital processing, cellular phones, smart phones, wearable devices and other similar computing devices. The parts, their connections and relationships, and their functions shown herein are examples only, and are not intended to limit the implementations of the present disclosure as described and/or claimed herein.

As shown in Fig. 8, the electronic device includes one or more processors 801, a memory 802 and interfaces for connecting components, including a high-speed interface and a low-speed interface. The components are interconnected by using different buses and may be mounted on a common motherboard or otherwise as required. The processor may process instructions executed within the electronic device, including instructions stored in memory or on memory to display graphical information of the GUI on an external input or output device (such as a display device coupled to an interface). In other embodiments, multiple processors and/or multiple buses and multiple memories may be used with multiple memories, if required. Similarly, multiple electronic devices may be connected (for example, used as a server array, a set of blade servers or a multiprocessor system), and the electronic device provides some of the necessary operations. An example of a processor 801 is shown in Fig. 8.

The memory 802 is a non-transitory computer readable storage medium according to the present disclosure. The memory stores instructions executable by at least one processor to cause the at least one processor to execute the method for processing a user request according to the present disclosure. The non-transitory computer readable storage medium of the present disclosure stores computer instructions for causing a computer to execute the method for processing a user request according to the present disclosure.

As a non-transitory computer readable storage medium, the memory 802 may be used to store non-transitory software programs, non-transitory computer executable programs and modules, such as the program instructions or modules corresponding to the method for processing a user request in the embodiment of the present disclosure (for example, the user request receiving unit 701, the user request sending unit 702 and the prediction result receiving unit 703). The processor 801 runs the non-transitory software programs, instructions and modules stored in the memory 802 to execute various functional applications and data processing of the server, thereby implementing the method for processing a user request in the embodiment of the method.

The memory 802 may include a storage program area and a storage data area, where the storage program area may store an operating system and an application program required by at least one function; and the storage data area may store data created by the electronic device when executing the method for processing a user request. In addition, the memory 802 may include a high-speed random access memory, and may further include a non-transitory memory, such as at least one magnetic disk storage device, a flash memory or other non-transitory solid state storage devices. In some embodiments, the memory 802 may alternatively include a memory disposed remotely relative to the processor 801, which may be connected through a network to the electronic device adapted to execute the method for processing a user request. Examples of such networks include, but are not limited to, the Internet, enterprise intranets, local area networks, mobile communication networks and combinations thereof.

The electronic device adapted to execute the method for processing a user request may further include an input device 803 and an output device 804. The processor 801, the memory 802, the input device 803 and the output device 804 may be interconnected through a bus or other means, and an example of a connection through a bus is shown in Fig. 8.

The input device 803 may receive input digit or character information, and generate key signal input related to user settings and functional control of the electronic device adapted to execute the method for processing a user request, such as a touch screen, a keypad, a mouse, a track pad, a touch pad, a pointer bar, one or more mouse buttons, a trackball or a joystick. The output device 804 may include a display device, an auxiliary lighting device (such as an LED) and a tactile feedback device (such as a vibration motor). The display device may include, but is not limited to, a liquid crystal display (LCD), a light emitting diode (LED) display and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), and the Internet.

The computing system may include a client and a server. The client and the server are generally far from each other and usually interact through the communication network. The relationship between the client and the server is generated by computer programs that run on the corresponding computer and have a client-server relationship with each other. The server may be a cloud server, also known as a cloud computing server or a cloud host. The server is a host product in the cloud computing service system to solve the defects of management difficulty in traditional physical host and virtual private server (VPS) services Large, and weak business scalability.

Different from the conventional technology that creates and stores the prediction model on the feature data provider, the embodiment of the present disclosure creates and stores the prediction model on the data user, so that the labeled results that are more sensitive than the feature data provided by the feature data provider do not need to exit the domain from the data user, thereby reducing the risks that may occur due to the data exiting the domain. At the same time, since the target model is more generally used by the data user based on the requests sent by the users, setting the target model locally on the data user may also reduce the performance and time overhead caused by the feature data provider and the long-distance transmission of the data, thereby responding to user requests more quickly.

It should be understood that the various forms of processes shown above may be used to reorder, add, or delete steps. For example, the steps described in the present disclosure may be performed in parallel, sequentially, or in different orders. As long as the desired results of the technical solution disclosed in the present disclosure can be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors.

## Claims

1. A method for processing a user request, the method comprising:
receiving (201) a user request;
sending (202) the user request to a target prediction model stored in a local secure container of a data user, wherein the local secure container is created in a local storage space by using Software Guard Extensions technology, and the target prediction model is obtained by training an initial prediction model with an encrypted feature sample and a labeled result sample corresponding to the encrypted feature sample, and the encrypted feature sample is a feature sample obtained after a feature data provider encrypts a plaintext feature sample provided by the feature data provider, and transmitted by the feature data provider through a ciphertext transmission path established between the feature data provider and the local secure container, and a training sample of the target prediction model is composed of two parts coming respectively from two different execution bodies, one is a directly user-oriented data user directly providing a service to the user, and the other is the feature data provider providing the user-oriented data user with partial feature data for obtaining a prediction result and being missed from the data user;
creating the target prediction model and storing the target prediction model on the data user;
receiving (203) the prediction result output by the target prediction model;
determining an actual risk rating of a user corresponding to the user request according to the prediction result; and
returning response information indicating that the user request is not passed, in response to the actual risk rating being not higher than a preset rating.

2. The method according to claim 1, the method further comprising:
performing identity verification on actual data transmitted through the ciphertext transmission path; and
allowing the actual data to transmit into the local secure container, in response to a result of the identity verification being a legal feature data provider.

3. The method according to claim 2, wherein the performing comprises:
extracting (501) an actual certificate from the actual data transmitted through the ciphertext transmission path;
determining (502) whether the actual certificate is a legal certificate issued by an authority of the Software Guard Extensions technology;
determining (503) that the feature data provider that transmits the actual data is the legal feature data provider, in response to the actual certificate being the legal certificate; or
determining (505) that the feature data provider that transmits the actual data is an illegal feature data provider, in response to the actual certificate being not the legal certificate.

4. The method according to any one of claims 1 to 3, the method further comprising:
receiving an incremental encrypted feature transmitted by the feature data provider through the ciphertext transmission path; and
updating the target prediction model by using the incremental encrypted feature and a labeled result corresponding to the incremental encrypted feature.

5. An electronic device, comprising:
at least one processor (801); and
a memory (802) communicatively connected with the at least one processor (801), wherein the memory (802) stores instructions executable by the at least one processor (801), and the instructions, when executed by the at least one processor (801), cause the at least one processor (801) to execute the method for processing a user request according to any one of claims 1 to 4.

6. A non-transitory computer readable storage medium storing computer instructions, wherein the computer instructions cause a computer to execute the method for processing a user request according to any one of claims 1 to 4.

7. A computer program product comprising a computer program, the computer program, when executed by a processor, implementing the method for processing a user request according to any one of claims 1 to 4.

## Patentansprüche

1. Verfahren zum Verarbeiten einer Benutzeranforderung, wobei das Verfahren umfasst:
Empfangen (201) einer Benutzeranforderung;
Senden (202) der Benutzeranforderung an ein Zielvorhersagemodell, das in einem lokalen sicheren Behälter eines Datenbenutzers gespeichert ist, wobei der lokale sichere Behälter in einem lokalen Speicherplatz durch Verwenden von Software Guard Extensions-Technologie erstellt wird, und das Zielvorhersagemodell durch Trainieren eines anfänglichen Vorhersagemodells mit einer verschlüsselten Merkmalsprobe und einer markierten Ergebnisprobe, die der verschlüsselten Merkmalsprobe entspricht, erhalten wird, und die verschlüsselte Merkmalsabtastung eine Merkmalsprobe ist, die erhalten wird, nachdem ein Merkmalsdatenanbieter eine Klartextmerkmalsprobe, die von dem Merkmalsdatenanbieter bereitgestellt wird, verschlüsselt hat und von dem Merkmalsdatenanbieter über einen Geheimtextübertragungsweg übertragen wird, der zwischen dem Merkmalsdatenanbieter und dem lokalen sicheren Behälter eingerichtet ist, und eine Trainingsprobe des Zielvorhersagemodells aus zwei Teilen besteht, die jeweils aus zwei verschiedenen Ausführungsstellen stammen, wobei die eine ein direkt benutzerorientierter Datenbenutzer ist, der dem Benutzer direkt einen Dienst bereitstellt, und die andere der Merkmalsdatenanbieter ist, der dem benutzerorientierten Datenbenutzer partielle Merkmalsdaten bereitstellt, um ein Vorhersageergebnis zu erhalten und von dem Datenbenutzer übersehen wird;
Erstellen des Zielvorhersagemodells und Speichern des Zielvorhersagemodells auf dem Datenbenutzer;
Empfangen (203) des Vorhersageergebnisses, das durch das Zielvorhersagemodell ausgegeben wird;
Bestimmen einer tatsächlichen Risikobewertung eines Benutzers, der der Benutzeranforderung entspricht, gemäß dem Vorhersageergebnis; und
Rücksenden von Antwortinformationen, die angeben, dass die Benutzeranforderung nicht bestanden wird, als Reaktion darauf, dass die tatsächliche Risikobewertung nicht höher als eine voreingestellte Bewertung ist.

2. Verfahren nach Anspruch 1, wobei das Verfahren ferner umfasst:
Durchführen einer Identitätsverifizierung an tatsächlichen Daten, die durch den Geheimtextübertragungsweg übertragen werden; und
Ermöglichen, dass die tatsächlichen Daten in den lokalen sicheren Behälter übertragen werden, als Reaktion darauf, dass ein Ergebnis der Identitätsverifizierung ein Anbieter legaler Merkmalsdaten ist.

3. Verfahren nach Anspruch 2, wobei das Durchführen umfasst:
Extrahieren (501) eines tatsächlichen Zertifikats aus den tatsächlichen Daten, die durch den Geheimtextübertragungsweg übertragen werden;
Bestimmen (502), ob das tatsächliche Zertifikat ein legales Zertifikat ist, das von einer Behörde der Software Guard Extensions-Technologie ausgegeben wird;
Bestimmen (503), dass der Merkmalsdatenanbieter, der die tatsächlichen Daten überträgt, der legale Merkmalsdatenanbieter ist, als Reaktion darauf, dass das tatsächliche Zertifikat das legale Zertifikat ist; oder
Bestimmen (505), dass der Merkmalsdatenanbieter, der die tatsächlichen Daten überträgt, ein illegaler Merkmalsdatenanbieter ist, als Reaktion darauf, dass das tatsächliche Zertifikat nicht das legale Zertifikat ist.

4. Verfahren nach einem der Ansprüche 1 bis 3, wobei das Verfahren ferner umfasst:
Empfangen eines inkrementellen verschlüsselten Merkmals, das von dem Merkmalsdatenanbieter über den Geheimtextübertragungsweg übertragen wird; und
Aktualisieren des Zielvorhersagemodells unter Verwendung des inkrementellen verschlüsselten Merkmals und eines markierten Ergebnisses, das dem inkrementellen verschlüsselten Merkmal entspricht.

5. Elektronische Vorrichtung, umfassend:
mindestens einen Prozessor (801); und
einen Speicher (802), der kommunikativ mit dem mindestens einen Prozessor (801) verbunden ist, wobei der Speicher (802) Anweisungen speichert, die durch den mindestens einen Prozessor (801) ausführbar sind, und die Anweisungen, wenn sie durch den mindestens einen Prozessor (801) ausgeführt werden, den mindestens einen Prozessor (801) veranlassen, das Verfahren zum Verarbeiten einer Benutzeranforderung nach einem der Ansprüche 1 bis 4 auszuführen.

6. Nichtflüchtiges computerlesbares Speichermedium, das Computeranweisungen speichert, wobei die Computeranweisungen einen Computer veranlassen, das Verfahren zum Verarbeiten einer Benutzeranforderung nach einem der Ansprüche 1 bis 4 auszuführen.

7. Computerprogrammprodukt umfassend ein Computerprogramm, wobei das Computerprogramm, wenn es von einem Prozessor ausgeführt wird, das Verfahren zum Verarbeiten einer Benutzeranforderung nach einem der Ansprüche 1 bis 4 implementiert.

## Revendications

1. Procédé permettant de traiter une demande d'utilisateur, le procédé comprenant :
la réception (201) d'une demande d'utilisateur ;
l'envoi (202) de la demande d'utilisateur à un modèle de prédiction cible stocké dans un conteneur sécurisé local d'un utilisateur de données, le conteneur sécurisé local étant créé dans un espace de stockage local en utilisant une technologie Software Guard Extensions, et le modèle de prédiction cible étant obtenu par entraînement d'un modèle de prédiction initial avec un échantillon de caractéristique chiffré et un échantillon de résultat marqué correspondant à l'échantillon de caractéristique chiffré, et l'échantillon de caractéristique chiffré étant un échantillon de caractéristique obtenu après qu'un fournisseur de données de caractéristiques a chiffré un échantillon de caractéristique en texte en clair fourni par le fournisseur de données de caractéristiques, et transmis par le fournisseur de données de caractéristiques par l'intermédiaire d'un chemin de transmission en texte chiffré établi entre le fournisseur de données de caractéristiques et le conteneur sécurisé local, et un échantillon d'entraînement du modèle de prédiction cible étant composé de deux parties venant respectivement de deux organes d'exécution différents, l'un étant un utilisateur de données directement orientées vers l'utilisateur fournissant directement un service à l'utilisateur, et l'autre étant le fournisseur de données de caractéristiques fournissant, à l'utilisateur de données orientées vers l'utilisateur, des données de caractéristiques partielles permettant d'obtenir un résultat de prédiction et étant omises dans l'utilisateur de données ;
la création du modèle de prédiction cible et le stockage du modèle de prédiction cible sur l'utilisateur de données ;
la réception (203) du résultat de prédiction délivré en sortie par le modèle de prédiction cible ;
la détermination d'une cote de risque réelle d'un utilisateur correspondant à la demande d'utilisateur selon le résultat de prédiction ; et
le renvoi d'informations de réponse indiquant que la demande d'utilisateur n'est pas réussie, en réponse à la cote de risque réelle n'étant pas supérieure à une cote prédéfinie.

2. Procédé selon la revendication 1, le procédé comprenant en outre :
la mise en oeuvre d'une vérification d'identité sur des données réelles transmises par l'intermédiaire du chemin de transmission en texte chiffré ; et
le fait de permettre la transmission des données réelles dans le conteneur sécurisé local, en réponse à un résultat de la vérification d'identité étant un fournisseur de données de caractéristiques légal.

3. Procédé selon la revendication 2, dans lequel la mise en oeuvre comprend :
l'extraction (501) d'un certificat réel à partir des données réelles transmises par l'intermédiaire du chemin de transmission en texte chiffré ;
le fait de déterminer (502) si le certificat réel est un certificat légal délivré par une autorité de la technologie Software Guard Extensions ;
la détermination (503) que le fournisseur de données de caractéristiques qui transmet les données réelles est le fournisseur de données de caractéristiques légal, en réponse au certificat réel étant le certificat légal ; ou
la détermination (505) que le fournisseur de données de caractéristiques qui transmet les données réelles est un fournisseur de données de caractéristiques illégal, en réponse au certificat réel n'étant pas le certificat légal.

4. Procédé selon l'une quelconque des revendications 1 à 3, le procédé comprenant en outre :
la réception d'une caractéristique chiffrée incrémentielle transmise par le fournisseur de données de caractéristiques par l'intermédiaire du chemin de transmission en texte chiffré ; et
la mise à jour du modèle de prédiction cible en utilisant la caractéristique chiffrée incrémentielle et un résultat marqué correspondant à la caractéristique chiffrée incrémentielle.

5. Dispositif électronique, comprenant :
au moins un processeur (801) ; et
une mémoire (802) connectée par communications à l'au moins un processeur (801), la mémoire (802) stockant des instructions exécutables par l'au moins un processeur (801), et les instructions, lorsqu'elles sont exécutées par l'au moins un processeur (801), amenant l'au moins un processeur (801) à exécuter le procédé permettant de traiter une demande d'utilisateur selon l'une quelconque des revendications 1 à 4.

6. Support de stockage non transitoire lisible par ordinateur stockant des instructions d'ordinateur, les instructions d'ordinateur amenant un ordinateur à exécuter le procédé permettant de traiter une demande d'utilisateur selon l'une quelconque des revendications 1 à 4.

7. Produit programme d'ordinateur comprenant un programme d'ordinateur, le programme d'ordinateur, lorsqu'il est exécuté par un processeur, implémentant le procédé permettant de traiter une demande d'utilisateur selon l'une quelconque des revendications 1 à 4.
